**Europäisches Patentamt**

**European Patent Office**

**Office européen des brevets**

(19)

(11) Veröffentlichungsnummer: **0 208 882**
**B1**

(12) # EUROPÄISCHE PATENTSCHRIFT

(45) Veröffentlichungstag der Patentschrift:
**08.11.89**

(21) Anmeldenummer: **86107153.8**

(22) Anmeldetag: **27.05.86**

(51) Int. Cl.⁴: **A 01 N 55/04** // (A01N55/04,
47:38)

(54) **Biozide Wirkstoffkombinationen.**

(30) Priorität: **26.06.85 DE 3522788**

(43) Veröffentlichungstag der Anmeldung:
**21.01.87 Patentblatt 87/4**

(45) Bekanntmachung des Hinweises auf die Patenterteilung:
**08.11.89 Patentblatt 89/45**

(84) Benannte Vertragsstaaten:
**CH DE FR GB LI SE**

(56) Entgegenhaltungen:
**EP-A- 0 066 764**
**FR-A- 2 516 350**

(73) Patentinhaber: **SCHERING AKTIENGESELLSCHAFT**
**Berlin und Bergkamen, Waldstrasse 14 Postfach 15 40,**
**D-4709 Bergkamen (DE)**

(72) Erfinder: **Landsiedel, Horst,**
**Augustin-Wibbelt-Strasse 18, D-4750 Unna (DE)**
Erfinder: **Plum, Hans, Dr. Dipl.-Chem., Sulkshege 12,**
**D-4700 Hamm (DE)**

## Beschreibung

Die Erfindung betrifft Mittel, welche infolge ihrer bakteriziden und fungiziden Eigenschaften als Desinfektionsmittel, Holzschutzmittel, zur bakteriziden und fungiziden Ausrüstung von Textilien, Kunststoffen, Baustoffen oder als Konservierungsmittel bzw. zur bioziden Ausrüstung von Anstrichsystemen geeignet sind.

Die erfindungsgemäßen Mittel enthalten als Wirkstoffe

a) Tri-n-butylzinnverbindungen

b) N-Propyl-N-2-(2,4,6-trichlorphenoxy)ethyl-1H--imidazol-1-carboxamid (Prochloraz)

im Gewichtsverhältnis 9:1 bis 1:9, insbesondere 3:1 bis 1:3.

Die hohe Wirksamkeit von Triorganozinnverbindungen gegen Mikroorganismen, z.B. schädliche Pilze und Bakterien, ist bekannt. Das Wirkungsoptimum dieser Verbindungsklasse liegt dann vor, wenn die Gesamt-C-Zahl der am Zinn gebundenen Alkylgruppe 9-12 beträgt. Gebräuchlich sind daher insbesondere die Tri-n-butylzinnverbindungen, z.B. Tri-n--butylzinnoxid.

Das Produkt N-Propyl-N-2-(2,4,6-trichlorphenoxy)ethyl-1H-imidazol-1-carboxamid ist bekannt als gut wirksames Fungizid mit breitem Wirkungsspektrum. Besonders ausgeprägt ist die Wirkung gegen Ascomyceten und Deuteromyceten, wesentlich schwächer die gegen Basidiomyceten.

Es wurde nun überraschend gefunden, daß Kombinationen von Tri-n-butylzinnverbindungen mit N--Propyl-N-2-(2,4,6-trichlorphenoxy)ethyl-1H-imidazol-1-carboxamid gegen Mikroorganismen eine synergistische Wirkung aufweisen. Die erfindungsgemäßen Mittel erweitern die Wirkungsspektren der einzelnen Substanzen erheblich und verstärken die Hemmwirkung gegenüber Mikroorganismen, gegen die die einzelnen Substanzen an sich schon eine gute Wirkung aufweisen (siehe Tab. 1 und 2).

Als Triorganozinnverbindungen sind insbesondere die Tributylzinnverbindungen geeignet, von denen bevorzugt eingesetzt werden: Tri-n-butylzinnoxid, Tri-n-butylzinnchlorid sowie Ester anorganischer und organischer Säuren, wie Tri-n-butylzinnaphthenat, Tri-n-butylzinnlinoleat, Tri-n-butylzinntallat, Tri--n-butylzinnphosphat, Tri-n-butylzinnabietat, Tri-n--butylzinnversatat, Tri-n-butylzinnborat.

Die erfindungsgemäßen Mittel lassen sich insbesondere für den Holzschutz einsetzen, da hierdurch der Verhinderung des Abbaus durch holzzerstörende Pilze auch ein Schutz gegen holzverfärbende Pilze und Bakterienbefall erreicht wird. Bakterien bewirken keinen Abbau des Holzes, können aber einen Angriff durch Pilze begünstigen.

Die Mittel werden in Form von Lösungen, gegebenenfalls mit Farb- und Hilfsstoffen, in das Holz durch Streichen, Spritzen, Sprühen oder Tauchen eingebracht.

Des weiteren lassen sich die erfindungsgemäßen Mittel für die biozide Ausrüstung von Textilien, Kunststoffen und Baustoffen einsetzen, wobei sie zweckmäßig in Form von Zubereitungen wie Lösungen, Emulsionen, Dispersionen mit und ohne Bindemittel oder mit festen Trägerstoffen bzw. Verdünnungsmitteln und gegebenenfalls mit Zusatz von Netz-, Haft-, Emulgier- und Dispergierhilfsmitteln angewandt werden.

Die Wirkstoffkonzentrationen liegen im allgemeinen im Bereich von 0,05 bis 50 Gew.-% und werden durch die Anforderungen der Anwendung und die Aufnahmefähigkeit der Substrate bestimmt.

Für den Holzschutz werden bevorzugt Lösungen der erfindungsgemäßen Mittel in Benzinfraktionen, gegebenenfalls mit Zusatz von Penetrationsfördermitteln, Bindemitteln oder anderen Lösungsmitteln, in Konzentrationen von 0,05 bis 5 Gew.-% verwendet und in Mengen von 50 bis 400 g Wirkstofflösung je m² Holzoberfläche durch Streichen, Spritzen und dergleichen aufgebracht.

Ein sehr wirkungsvoller Holzschutz wird erreicht, wenn die erfindungsgemäßen Mittel, gelöst in geeigneten Substanzen, durch spezielle technische Verfahren, z.B. Doppelvakuumverfahren, Vakuumverfahren oder Vakuumdruckverfahren, in das Holz eingebracht werden, so daß eine Beladung von 0,1 bis 3,0 — vorzugsweise 0,3 bis 1,0 kg — Wirkstoff je m³ Holz erreicht wird.

Mit den erfindungsgemäßen Mitteln lassen sich auch wasserverdünnbare Formulierungen erstellen, die ebenfalls für den Holzschutz eingesetzt werden können, z.B. durch Streichen, Tauchen usw. mit Emulsionen, die 0,5 bis 3 Gew,-% Wirkstoff enthalten.

Zum Schutz von Holzwerkstoffen können die erfindungsgemäßen Mittel in Form von hochkonzentrierten Lösungen bzw. Formulierungen mit Emulgatoren dem Bindemittel oder Klebstoff in Mengen von 0,1 bis 2 Gew.-%, bezogen auf Wirkstoff, zugesetzt werden.

Zum Schutz von Textilien, z.B. Baumwollgeweben, gegen Mikroorganismen lassen sich die Mittel als Lösungen, z.B. in Ethanol, Xylol, Ketonen, mit Wirkstoffkonzentrationen von 0,05 bis 3 Gew.-% mittels Sprühen oder Tränken aufbringen, wobei gegebenenfalls Hydrophobierungsmittel zugesetzt werden können.

Zur Verbreitung des Wirkungsspektrums, zur Erzielung besonderer Wirkung gegen spezielle Mikroorganismen oder zur insektiziden Ausrüstung lassen sich die erfindungsgemäßen Mittel mit anderen Wirkstoffen kombinieren, z.B. sind hierzu geeignet:

3-Jod-2-propynyl-butyl-carbamat,
Kupfernaphthenat,
Kupfer-8-oxychinolin,
N-Cyclohexyl-N-methoxy-2,5-dimethyl-furan-3--carbonsäureamid,
N,N-Dimethyl-N'-phenyl-N'-fluordichlormethyl--thiosulfonyl-diamid,
N-Trichlormethylthio-phthalimid,
γ-Hexachlorcyclohexan,
Permethrin.

*Beispiele*

*Beispiel 1*

Eine farblose, wenig Bindemittel enthaltende Formulierung, bestehend aus

1 Gew.-Tl. Tri-n-butylzinnoxid

1 Gew.-Tl. N-Propyl-N-2-(2,4,6-trichlor-
phenoxy)ethyl-1H-imidazol-
-carboxamid
0,1 Gew.-Tl. Permethrin
5 Gew.-Tl. Diethylenglykolmonobutylether
10 Gew.-Tl. langöliges Alkydharz (50%ig)
82,9 Gew.-Tl. hochsiedendes Testbenzin (Kristallöl 60),

zeigt ein gutes Eindringvermögen und läßt sich sehr gut als Holzschutzgrundierung für Bauholz verwenden.

## Beispiel 2

Eine farbige Holzschutz-Lasur, bestehend aus

2,2 Gew.-Tl. Tri-n-butylzinnnaphthenat
1,0 Gew.-Tl. N-Propyl-N-2-(2,4,6-trichlor-
phenoxy)ethyl-1H-imidazol-
-carboxamid
40 Gew.-Tl. langöliges Alkydharz (50%ig).
0,5 Gew.-Tl. Sikkative
0,5 Gew.-Tl. Antiabsetzmittel
9,2 Gew.-Tl. Eisenoxidrotpaste
0,8 Gew.-Tl. Eisenoxidschwarzpaste
6 Gew.-Tl. Diethylenglykolmonobutylether
39,8 Gew.-Tl. hochsiedendes Testbenzin (Kristallöl 60),

ist geeignet zum Anstrich von maßhaltigen Holzbauteilen wie Fensterrahmen, Türen usw.

## Beispiel 3

Eine wasserverdünnbare Wirkstoffkombination, bestehend aus

20 Gew.-Tl. Tri-n-butylzinnlinoleat
20 Gew.-Tl. N-Propyl-N-2-(2,4,6-trichlorphen-
oxy(ethyl-1H-imidazol-carboxamid
(70%ig in Xylol)
60 Gew.-Tl. nichtionogener Emulgator,

läßt sich in weiten Bereichen 1:5 - 1:50 mit Wasser verdünnen und ergibt stabile Emulsionen zum Streichen, Spritzen oder Tauchen von z.B. frisch geschlagenem Holz.

Die unverdünnte Formulierung wird in Konzentrationen von 0,2 bis 3 Gew.-% zur bioziden Ausrüstung von wäßrigen Anstrichsystemen, z.B. Dispersionen aus Acrylat-Basis, eingesetzt.

Zum Wirkungsvergleich wurden mit den in Tabelle 1 und 2 näher bezeichneten äthanolischen Lösungen Papierrundfilter ($\varnothing$ 5,5 cm) getränkt, an der Luft getrocknet und danach in Petrischalen auf Agar, der mit Bakteriensuspensionen bzw. Pilzsporensuspension beimpft war, gelegt und 2 Tage bei +37°C (Bakterien) bzw. 3 Wochen bei +30°C (Pilze) bebrütet.

Danach wurden die Hemmzonen (Breite der bewuchsfreien Zone in mm) um die Proben bestimmt.

TABELLE 1

Agar-Auflegetest, Hemmzonen um die Proben in mm

| Tränklösung | | Bakterien | | | | Pilze | | |
|---|---|---|---|---|---|---|---|---|
| Wirkstoff | Gew.-% in Äthanol | Bacillus subtilis | Bacillus mesentericus | Lenzites trabea | Poria monticula | Aspergillus ustus | Tricho- derma viride | Pullularia pullulans |
| TBTO | 1,0 | 12-15 | 12-15 | 12-15 | 12-15 | 3-5 | 3-5 | 6-8 |
| | 0,5 | 12-15 | 10-10 | 10-12 | 12-15 | 2-3 | 3-4 | 3-5 |
| | 0,25 | 10-12 | 8-10 | 5- 6 | 10-12 | 1-2 | 2-3 | 0 |
| Prochloraz | 1,0 | 4- 6 | 8-10 | 0 + | 0 + | 10-12 | 10-12 | 12-15 |
| | 0,5 | 2- 3 | 6- 8 | 0 + + | 0 + | 8-10 | 8-10 | 12-15 |
| | 0,25 | 1- 2 | 5- 7 | 0 + + + | 0 + + | 1- 2 | 2- 3 | 10-12 |
| TBTO : Pro- chloraz (1:1 Gew.-Tl.) | 1,0 | 12-15 | 12-15 | >15 | >15 | 12-15 | 12-15 | >15 |
| | 0,5 | 12-15 | 12-15 | 12-15 | 12-15 | 8-10 | 10-12 | >15 |
| | 0,25 | 12-15 | 12-15 | 10-12 | 10-12 | 3- 4 | 5- 6 | 12-15 |

TBTO = Tributylzinnoxid
Prochloraz = N-Propyl-N-2-(2,4,6-trichlorphenoxy)ethyl-1H-imidazol-carboxamid

+ = schwacher Bewuchs der Probe
+ + = mittlerer Bewuchs der Probe
+ + + = starker Bewuchs der Probe

## TABELLE 2

### Agar-Auflegetest, Hemmzonen um die Proben in mm

| Tränklösung | | Bakterien | | | | Pilze | | |
|---|---|---|---|---|---|---|---|---|
| Wirkstoff | Gew.-% in Äthanol | Bacillus subtilis | Bacillus mesentericus | Lentinus lepideus | Polystictus versicolor | Paecilo-myces varioti | Chaeto-mium globosum | Cladospo-rium herbarum |
| TBTN | 2,0 | 10-12 | 8-10 | 8-10 | 10-12 | 3 - 4 | 6- 8 | 3- 4 |
| | 1,0 | 8-10 | 8-10 | 5- 6 | 6- 8 | 2 - 3 | 4- 6 | 1- 2 |
| | 0,5 | 6- 8 | 6- 8 | 2- 3 | 3- 4 | 2 - 3 | 2- 3 | 0+ |
| Prochloraz | 1,0 | 4- 6 | 8-10 | 0 | 10-12 | 0+ + | 12-15 | 12-15 |
| | 0,5 | 2- 3 | 6- 8 | 0+ | 5- 7 | 0+ + + | 10-12 | 12-15 |
| | 0,25 | 1- 2 | 5- 7 | 0+ + + | 0- 1 | 0+ + + | 6- 8 | 10-12 |
| TBTN : Pro-chloraz (2:1 Gew.-Tl.) | 1,5 | 12-15 | 10-12 | 12-15 | 12-15 | 6- 8 | >15 | 12-15 |
| | 0,75 | 10-12 | 10-12 | 12-15 | 12-15 | 6- 8 | 12-15 | 12-15 |
| | 0,38 | 10-12 | 8-10 | 6- 8 | 6- 8 | 3- 4 | 10-12 | 12-15 |

TBTN       = Tributylzinnapthenat
Prochloraz = N-Propyl-N-2-(2,4,6-trichlorphenoxy)ethyl-1H-imidazol-carboxamid

+       = schwacher Bewuchs der Probe
+ +     = mittlerer Bewuchs der Probe
+ + +   = starker Bewuchs der Probe

## Patentansprüche

1. Bakterizide und fungizide Mittel, enthaltend als Wirkstoffe
a) Tri-n-butylzinnverbindungen
b) N-Propyl-N-2-(2,4,6-trichlorphenoxy)ethyl-1H--imidazol-1-carboxamid.

2. Wirkstoffmischungen nach Anspruch 1 im Gewichtsverhältnis 9:1 bis 1:9, insbesondere 3:1 bis 1:3.

3. Verwendung der Wirkstoffmischungen gemäß Anspruch 1 zur Herstellung von Holzschutzmitteln.

4. Verwendung der Wirkstoffmischungen gemäß Anspruch 1 zur bioziden Ausrüstung von Materialien und Anstrichsystemen.

## Claims

1. Bactericidal and fungicidal agents, containing as active substances
a) tri-n-butyltin compounds and
b) N-propyl-N-2-(2,4,6-trichlorphenoxy)ethyl-1H--imidazole-1-carboxamide.

2. Active substance mixtures according to claim 1 in a ratio by weight of from 9:1 to 1:9, especially from 3:1 to 1:3.

3. Use of the active substance mixtures according to claim 1 for the manufacture of wood preservatives.

4. Use of the active substance mixtures according to claim 1 for imparting biocidal properties to materials and coating systems.

## Revendications

1. Produits bactéricides et fongicides qui contiennent comme matières actives:
a) des composés tri-n-butyl-stanniques et
b) du N-propyl-N-[(trichloro-2,4,6 phénoxy)-2 éthyl]-amide de l'acide 1H-imidazole-carboxylique-1.

2. Mélanges de matières actives selon la revendication 1 dans un rapport pondéral compris entre 9:1 et 1:9, plus particulièrement entre 3:1 et 1:3.

3. Application des mélanges de matières actives selon la revendication 1 à la fabrication de produits pour la protection du bois.

4. Application des mélanges de matières actives selon la revendication 1 au traitement biocide de matières et de produits de revêtement et peintures.